# EUROPÄISCHE PATENTANMELDUNG

(11) **EP 1 357 364 A2**
(43) Veröffentlichungstag der Anmeldung: **29.10.2003**
(21) Anmeldenummer: 03100940.0
(22) Anmeldetag: 08.04.2003
(51) Int. Cl.: G01D 3/08, G01D 5/245

(54) **Verfahren zur Verminderung von Fehlern bei einer Positionsbestimmungsvorrichtung**

(30) Priorität: 23.04.2002 DE 10218119
(71) Anmelder: SIEMENS AKTIENGESELLSCHAFT, 80333 München (DE)
(72) Erfinder: Albert, Roland, 93047, Regensburg (DE); Kissler, Jose Cruz, 93077, Bad Abbach (DE); Last, Dr. Bernd, 31170, Tournefeuille (FR)

(57) **Zusammenfassung**

Die Erfindung betrifft ein Verfahren zum Ausschließen von Auswertefehlern bei der Positionsbestimmung eines rotierenden Körpers mittels eines Inkremental-Sensors. Ein erfindungsgemäßes Verfahren, das weitestgehend störunanfällig ist und darüber hinaus in der Lage ist, falsche Pulssignale zu erkennen, ist dadurch gekennzeichnet, dass zur Positionsbestimmung bei jeder auftretenden erfassten Flanke eines Pulssignals in Abhängigkeit von zumindest der letzten erfassten Flanke eines Pulssignals eine Plausibilitätsüberprüfung durchgeführt wird, und dass Ergebnis dieser Plausibilitätsüberprüfung zur Steuerung des Positionszählers verwendet wird.

## Beschreibung

Die Erfindung betrifft ein Verfahren zum Ausschließen von Auswertefehlern bei der Positionsbestimmung eines rotierenden Körpers mittels eines Inkremental-Sensors, wobei der Inkremental-Sensor zwei gegenüber dem rotierenden Körper ortsfest angeordnete Abtastelemente umfasst, die zwei phasenverschobene Pulssignale liefern, aus denen die Geschwindigkeit und die Richtung der Bewegung des rotierenden Körpers ableitbar und mittels eines Positionszählers erfassbar sind.

Bei einem inkrementalen Messsystem wird die zu messende Größe, eine Länge oder ein Winkel, in gleich große Teilstücke, sogenannte Inkremente, unterteilt. Ein solcher Rastermessstab setzt sich dann aus Teilstücken unterschiedlicher physikalischer Eigenschaften zusammen, bei optischen Systemen beispielsweise aus hellen und dunklen oder durchsichtigen und undurchsichtigen Flächen. Rastermaßstäbe werden hauptsächlich optisch oder magnetisch abgetastet. Wenn sich ein Rastermaßstab um die Strecke L = n ^{.} T, mit T gleich dem Abstand zwischen zwei gleichartigen Teilstücken, am Abtaster vorbeibewegt, wird dieser n Impulse liefern, die nach Impulsformung digital gezählt werden und somit die Lageinformation vermitteln. Sobald sich die Bewegungsrichtung des Rasters ändert, muss dafür gesorgt werden, dass sich auch die Zählrichtung im Positionszähler ändert.

Bei der Positionsbestimmung eines rotierenden Körpers, wie beispielsweise der Schaltwalze zur Gangsynchronisation eines Getriebes mittels eines Inkremental-Sensors liefert der Inkremental-Sensor zwei phasenverschobene Pulssignale, aus denen die Geschwindigkeit und die Richtung ermittelbar sind. Durch Zählen der Pulse lässt sich auch die Position der angesteuerten Walze ausrechnen. Aufgrund der hohen Empfindlichkeit des Systems gegenüber Störungen, wie beispielsweise durch Erschütterungen oder EMV, können unerwünschte Pulse entstehen und mitgezählt werden. Die Auswertesoftware ist in der Regel nicht in der Lage, falsche Pulse zu erkennen und wegzufiltern, so dass die ausgerechnete Position des rotierenden Körpers mit der Betriebsdauer größer wird.

Aus der Druckschrift DE 690 12 041 T2 ist ein Verfahren zum Ausschließen von Auswertefehlern bei der Positionsbestimmung eines rotierenden Körpers mittels eines Inkremental-Sensors bekannt, wobei der Inkremental-Sensor zwei gegenüber dem rotierenden Körper ortfest angeordnete Abtastelemente umfasst, die zwei phasenverschobene Pulssignale liefern, aus denen die Geschwindigkeit und die Richtung der Bewegung des rotierenden Körpers ableitbar und mittels eines Positionszählers erfassbar sind, wobei zur Positionsbestimmung bei jeder auftretenden erfassten Flanke eines Pulssignals in Abhängigkeit von der letzten erfassten Flanke eines Pulssignals eine Plausibilitätsprüfung durchgeführt wird und das Ergebnis dieser Plausibilitätsprüfung zur Steuerung des Positionszählers verwendet wird.

Der Erfindung liegt die Aufgabe zugrunde, ein Verfahren zum Ausschließen von Auswertefehlern bei der Positionsbestimmung eines rotierenden Körpers mittels eines Inkremental-Sensors bereitzustellen, das weitestgehend störunanfällig ist und darüber hinaus in der Lage ist, falsche Pulssignale zu erkennen.

Die verfahrensmäßige Aufgabenstellung wird erfindungsgemäß durch die im Patentanspruch 1 genannten Merkmale gelöst.

Vorteilhafte Ausgestaltungen des Verfahrens zum Ausschließen von Auswertefehlern bei der Positionsbestimmung eines rotierenden Körpers mittels eines Inkremental-Sensors werden in den Unteransprüchen beschrieben.

Durch das Bereitstellen des erfindungsgemäßen Verfahrens mit einer Plausibilitätsüberprüfung zumindest der beiden zuletzt erfassten Flanken der Pulssignale wird es ermöglicht, eine Richtungsänderung von einem möglichen Fehler zu unterscheiden, so dass dieses Verfahren eine deutliche Verbesserung der Auswertesicherheit gewährleistet.

Weitere Merkmale und Vorteile der Erfindung ergeben sich aus der nachfolgenden Beschreibung, in der ein Ausführungsbeispiel eines erfindungsgemäßen Verfahrens zum Ausschließen von Auswertefehlern bei der Positionsbestimmung eines rotierenden Körpers mittels eines Inkremental-Sensors beispielhaft dargestellt ist.

In der nachfolgenden Tabelle ist dargelegt, wie die beim Erfassen der aktuellen Flanke eines Pulssignals die Plausibilitätsüberprüfung in Abhängigkeit von der Flanke des zuletzt erfassten Pulssignals durchgeführt wird.

| **Aktuelle Flanke:** | **Letzte Flanke Sig-1 steigend:** | **Letzte Flanke Sig-1 fallend:** | **Letzte Flanke Sig-2 steigend:** | **Letzte Flanke Sig-2 fallend:** |
|---|---|---|---|---|
| **Sig-1 steigend** | Fehler => Zähler unverändert | Richtungsänderung oder Fehler Wenn Sig-2 = 0 => +1 Wenn Sig-2 = 1 => -1 | -1 | +1 |
| **Sig-1 fallend** | Richtungsänderung oder Fehler Wenn Sig-2 = 0 => -1 Wenn Sig-2 = 1 => +1 | Fehler => Zähler unverändert | +1 | -1 |
| **Sig-2 steigend** | +1 | -1 | Fehler => Zähler unverändert | Richtungsänderung oder Fehler Wenn Sig-1 = 0 => -1 Wenn Sig-1 = 1 => +1 |
| **Sig-2 fallend** | -1 | +1 | Richtungsänderung oder Fehler Wenn Sig-1 = 0 => +1 Wenn Sig-1 = 1 => -1 | Fehler => Zähler unverändert |

Bei jeder neu erfassten Flanke eines Pulssignals wird in Abhängigkeit von der letzten erfassten Flanke eines Pulssignals entschieden, ob die aktuell erfasste Flanke richtig ist oder nicht und, ob somit der Positionszähler zu verändern ist.

Nachfolgend werden drei in der obigen Tabelle wiedergegebene Beispiele der Plausibilitätsüberprüfung näher betrachtet:
1. Ist zum Beispiel die neu detektierte Flanke "Sig-1 fallend" und die letzte detektierte Flanke war "letzte Flanke Sig-2 steigend", dann wird der Positionszähler um eins erhöht.
2. Ist zum Beispiel die neu detektierte Flanke "Sig-1 fallend" und die letzte detektierte Flanke war "letzte Flanke Sig-1 fallend", dann liegt bleibt der Positionszähler bleibt unverändert, da diese Situation als Fehler interpretiert wird. Mindestens eine Flanke muss verloren gegangen sein.
3. Ist zum Beispiel die neu detektierte Flanke "Sig-1 fallend" und die letzte detektierte Flanke war "letzte Flanke Sig-1 steigend", dann wird der Positionszähler um eins verringert, da es als Richtungsänderung interpretiert wird.

Das Verfahren kann dadurch weiter verfeinert werden, dass mehrere Flanken der Pulssignale bei der Plausibilitätsüberprüfung berücksichtigt werden.

Um auszuschließen, dass beim Auswerten der Pulssignale ein Verzählen unbemerkt bleibt, kann zusätzlich ein Vertrauenswert eingeführt werden. Nach dem Initialisieren (Eichen) der Position des rotierenden Körpers, der zu diesem Zweck in eine definierte Eich-Position verfahren wird, wird der Positionszähler auf einen bestimmtem Wert gesetzt und diesem Wert ein Ausgangs-Vertrauenswert von 100% zugeordnet. Dies bedeutet, dass in dieser Eich-Position der Positionszähler einen zu 100% richtigen Wert anzeigt.
Während des Betriebs wird der Vertrauenswert verändert, beispielsweise reduziert, wenn, wie im Beispiel 2, ein möglicher Fehler erkannt wird. Der dargestellte Fehler, bei dem zwei fallende Flanken eines Pulssignals, das heißt eines Abtastelements, nacheinander erkannt werden, könnte bedeuten, dass das Abtastelement eine steigende Flanke nicht mitbekommen hat. In diesem Fall wird der Positionszähler gehalten, aber der Vertrauenswert verändert.

Um mögliche Zählfehler möglichst gering zu halten, werden Grenzwerte für den Vertrauenswert definiert, ab denen erneut eine Eich-Position angefahren werden muss, um dann in dieser Position den Positionszähler dem entsprechenden Wert zuordnen zu können.

Zusätzlich oder alternativ zu der Veränderung des Vertrauenswertes bei der Erkennung eines möglichen Fehlers während der Plausibilitätsüberprüfung ist es möglich, den Vertrauenswert zeitlich getaktet zu verändern, wobei die Taktintervalle aus in der Praxis ermittelten statistischen Werten festgesetzt werden, die darüber Aufschluss geben, in welcher Zeit statistisch gesehen Fehler auftreten.

Damit nach einem Neustart sofort eine Positionsbestimmung ausgegeben werden kann, werden der Ist-Wert des Vertrauenswerts sowie der zugehörige Stand des Positionszählers bei jedem Stoppen des rotierenden Körpers in einem nichtflüchtigen Speicher gespeichert. Aus Sicherheitsgründen, beispielsweise um eine mögliche Positionsänderung auch nach dem Herunterfahren zu berücksichtigen, kann der Vertrauenswert vorsichtshalber bei jedem Neustart verändert werden.

Mit einem solchermaßen ausgestalteten Verfahren ist es nunmehr möglich, Auswertefehler durch Änderung der Bewegungsrichtung- und/oder Fehlinterpretationen der Pulssignale mit großer Sicherheit zu vermeiden.

## Patentansprüche

1. Verfahren zum Ausschließen von Auswertefehlern bei der Positionsbestimmung eines rotierenden Körpers mittels eines Inkremental-Sensors, wobei der Inkremental-Sensor zwei gegenüber dem rotierenden Körper ortsfest angeordnete Abtastelemente umfasst, die zwei phasenverschobene Pulssignale liefern, aus denen die Geschwindigkeit und die Richtung der Bewegung des rotierenden Körpers ableitbar und mittels eines Positionszählers erfassbar sind,
wobei
zur Positionsbestimmung bei einer auftretenden erfassten Flanke eines Pulssignals in Abhängigkeit von zumindest der letzten erfassten Flanke eines Pulssignals eine Plausibilitätsüberprüfung durchgeführt wird, und das Ergebnis der Plausibilitätsüberprüfung zur Steuerung des Positionszählers verwendet wird,
**dadurch gekennzeichnet,**
**dass** dem Positionszähler in einer definierten Eich-Position des rotierenden Körpers ein Ausgangs-Vertrauenswert zugeordnet wird, der während der Positionsbestimmung um einen bestimmten Wert verändert wird,
**dass** der Ausgangs-Vertrauenswert dann um einen bestimmten Wert verändert wird, sobald die Plausibilitätsüberprüfung einen möglichen Auswertefehler ergibt,
und **dass** für den Vertrauenswert mindestens ein Grenzwert festlegbar ist, ab dessen Erreichen der rotierende Körper erneut in eine Eich-Position verfahren wird, um dem Positionszähler erneut den Ausgangs-Vertrauenswert zuzuordnen.

2. Verfahren nach Anspruch 1, **dadurch gekennzeichnet, dass** der Ausgangs-Vertrauenswert zeitlich getaktet um einen bestimmten Wert verändert wird.

3. Verfahren nach mindestens einem der Ansprüche 1 oder 2,
**dadurch gekennzeichnet, dass** der Ist-Wert des Vertrauenswerts sowie der zugehörige Stand des Positionszählers bei jedem Stoppen des rotierenden Körpers in einem nichtflüchtigen Speicher gespeichert werden.

4. Verfahren nach Anspruch 3, **dadurch gekennzeichnet, dass** der Vertrauenswert nach jedem Neustart des rotierenden Körpers um einen bestimmten Wert verändert wird.
